# EUROPEAN PATENT APPLICATION

(11) **EP 2 019 348 A1**
(43) Date of publication of application: **28.01.2009**
(21) Application number: 07706896.3
(22) Date of filing: 17.01.2007
(51) Int. Cl.: G05D 1/02, B60R 21/00

(54) **TRAVEL DEVICE FOR SELF-PROPELLED DEVICE**

(30) Priority: 17.05.2006 JP 2006137268
(71) Applicant: Murata Kikai Kabushiki Kaisha, Kyoto-shi Kyoto 601-8326 (JP)
(72) Inventor: MORIGUCHI, Toshiki, Kyoto-shi Kyoto 612-8686 (JP)
(74) Representative: Siegert, Georg
(86) International application number: PCT/JP2007/050581
(87) International publication number: WO 2007/132572

(57) **Abstract**

An object of the present invention is to provide a traveling unit for a self-propelled apparatus, which is capable of detecting two different collision levels. A traveling unit 40 of the present invention includes: two running wheels 12 rotatably supported by a frame 21; a motor which drives and rotates the two running wheels; and two tape switches 24 and 25 which detect a collision of the frame 21 (main body) with an obstacle. When the tape switch 25 detects a small level of collision which is a first collision, the traveling unit 40 performs an operation to avoid the obstacle. When the tape switch 24 detects a second collision whose collision level is higher than the first collision, the traveling unit 40 stops traveling.

## Description

### TECHNICAL FIELD

The present invention relates to a traveling unit for a self-propelled apparatus.

### BACKGROUND ART

A traveling unit in general for a self-propelled apparatus, such as unmanned carriers and self-propelled robots, has a collision detector which detects a collision of an obstacle with the traveling unit. To avoid a damage to associated devices or an accident, the unit is structured to stop traveling, upon detection of a collision by the collision detector.

An example of such a collision detector is one disclosed in JP06-219226, which is provided with tape switches disposed on front and tail bumpers of a vehicle. Each tape switch of JP06-219226 has two strips of silicon rubber tape. To these strips of silicon rubber tape are applied different voltages respectively. When the bumper collides an obstacle, the two strips of tape are shortcircuited, consequently varying the voltage. By detecting the variation of the voltage in the two strips of tape, the collision detector is able to detect the collision of the obstacle with the bumper. Further, a brake is activated upon the detection of the collision by the collision detector, thereby making an emergency stop of the self-propelled apparatus.

### DISCLOSURE OF THE INVENTION

### TECHNICAL PROBLEM

The foregoing collision detector of JP06-219226 however is only capable of detecting a collision of the traveling unit with an obstacle, and not capable of recognizing the level of collision. Therefore, even if the contact level of a collision is weak and there is no possibility that the collision will damage the associated devices or lead to an accident, the self-propelled apparatus will completely stop traveling, although the apparatus only needs to travel in a direction to avoid the obstacle. This leads to frequent emergency stops that are not necessary, unsmooth traveling, and an increase in the work of an operator who conducts a recovery operation or the like every time an emergency stop is made.

A main object of the present invention is to provide a traveling unit for a self-propelled apparatus, which is capable of detecting two different collision levels.

### TECHNICAL SOLUTION AND EFFECT

The first aspect of the present invention is a traveling unit for a self-propelled apparatus, including: a main body; running wheels rotatably supported by the main body; and traveling-drive means for driving and rotating the running wheels, wherein the main body includes a collision detection means for detecting a collision when the main body collides an obstacle, and the collision detection means is capable of detecting two different collisions one of which is a first collision and the other one of which is a second collision whose collision level is higher than that of the first collision.

This traveling unit is capable of detecting two different collision levels, with an aid of the collision detection means, and therefore is capable of performing two different operations according to the detected collision level. For example, when the collision detection means detects the first collision whose collision level (strength) is low, the traveling unit travels to avoid the obstacle, so as not to frequently stop traveling. Further, when the collision detection means detects the second collision whose collision level (strength) is high, the traveling unit makes an emergency stop to avoid an accident, a damage to the main body, or the like.

The second aspect of the present invention is the traveling unit of the first invention for a self-propelled apparatus, which further includes: avoidance control means for, upon detection of the first collision by the collision detection means, controlling the traveling-drive means so that the main body avoids the obstacle; and travel stopping means for, upon detection of the second collision by the collision detection means, causing the traveling-drive means to stop driving the running wheels. With this, when the collision detection means detects the first collision whose collision level (strength) is low, the avoidance control means controls the driving means so as to avoid the colliding obstacle. Thus, the traveling unit less frequently stop traveling. On the other hand, when the traveling unit acts up for example, and the collision detection means detects the second collision whose collision level (strength) is high, the travel stopping means urgently stops the driving of the running wheels, thereby preventing an accident, a damage to the main body, or the like.

The third aspect of the present invention is the traveling unit of the second invention for a self-propelled apparatus, which is adapted so that the travel stopping means stops driving the running wheels by shutting off power supply to the traveling-drive means. With this, the motive power supply to the running wheels is shut off to immediately stop the traveling of the traveling unit, thereby preventing an accident, a damage to the main body, or the like.

The fourth aspect of the present invention is the traveling unit of any one of the first to third inventions for a self-propelled apparatus, which is adapted so that: the collision detection means includes a first detector which detects the first collision and a second detector which detects the second collision; the first and second detectors each has a pair of electrodes and an elastic member coating the pair of electrodes; and the elastic member of the first detector has a greater elasticity than that of the second detector.

When the traveling unit collides an obstacle, the elastic members of the first and second detectors are deformed by the impulse force applied thereto at the time of the collision, and the elastic member-coated pairs of electrodes contact each other. Through this, the collision is detected. Here, the elastic member of the first detector is more elastic than that of the second detector. As such, when applying the same impulse force to these elastic members, the elastic member of the first detector is more likely to deform as compared with the elastic member of the second detector. Thus, while the first detector is able to detect the first collision whose collision level is low (impulse force is weak), the same collision is not detected by the second detector. On the other hand, if the impulse force of a collision increases, the force will also significantly deform the elastic member of the second detector, which is less elastic. This will cause the pair of the electrodes of the second detector to contact each other. Through this, the second collision, whose collision level is high, is detected by the second detector. Further, in the fourth invention, each detector has a simple structure including a pair of electrodes and an elastic member. Making the respective elasticities of the two elastic members different from each other will enable detection of two different collision levels. Thus, the structure of the collision detection means is made simple, and the fourth invention is advantageous in terms of costs.

The fifth aspect of the present invention is the traveling unit of the fourth invention for a self-propelled apparatus, which is adapted so that the elastic member of the first detector and that of the second detector overlap each other in a direction in which the pair of electrodes are spaced from each other.

Suppose that the two elastic members overlapped each other are subjected to an impulse force of the collision which is applied in a direction of spacing the electrodes. If the collision level is low, only the elastic member of the first detector significantly deforms and the electrodes of the first detector enters the conductive state. If the level of collision is high on the other hand, the elastic members of both detectors significantly deform and the respective pairs of electrodes enter the conductive state. That is, the two detector provided at the same position of the main body, overlapping each other, enable detection of two different collision levels. If two detectors are provided in different positions respectively, an obstacle only contacts one of the detectors and the collision level may not be detected. Such a problem however is not a concern in the fifth invention, because the two detectors overlap each other, and collision level is reliably detected with the fifth invention.

The sixth aspect of the present invention is the traveling unit of the fourth or fifth invention for a self-propelled apparatus, which is adapted so that the first and second detectors, respective pairs of electrodes and elastic members of the first and second detectors, are formed in a shape which is long in one direction; and the first and second detectors disposed on substantially the entire outer circumference of the main body. With this structure, a collision is reliably detected, no matter from which direction an obstacle collides the main body.

### BRIEF DESCRIPTION OF THE DRAWINGS

Fig. 1 is a front view of a guide robot of an embodiment, according to the present invention.
Fig. 2 is a plane view illustrating a traveling unit of the guide robot of the embodiment, according to the present invention.
Fig. 3 is a cross sectional view taken along the line III-III in Fig. 2.
Fig. 4 illustrates deformation of a tape switch when the level of a collision is low.
Fig. 5 illustrates a deformation of the tape switch when the level of a collision is high.
Fig. 6 is a circuit diagram schematically illustrating the structure of the traveling unit for performing an obstacle avoidance operation.
Fig. 7 is a circuit diagram schematically illustrating the structure of the traveling unit for performing a travel-stop operation.
Fig. 8 is a cross sectional view equivalent to Fig. 3, which illustrates an alternative form of the two tape switches.

### REFERENCE NUMERALS

12 Running Wheels
21 Frame
24 Tape Switch
25 Tape Switch
40 Traveling Unit

### BEST MODE FOR CARRYING OUT THE INVENTION

An embodiment of the present invention is described below. The present embodiment deals with an example where the present invention is applied to a traveling unit of a self-propelled guide robot which guides a person to be guided (hereinafter, guide target) to a predetermined target position while having a conversation with the guide target.

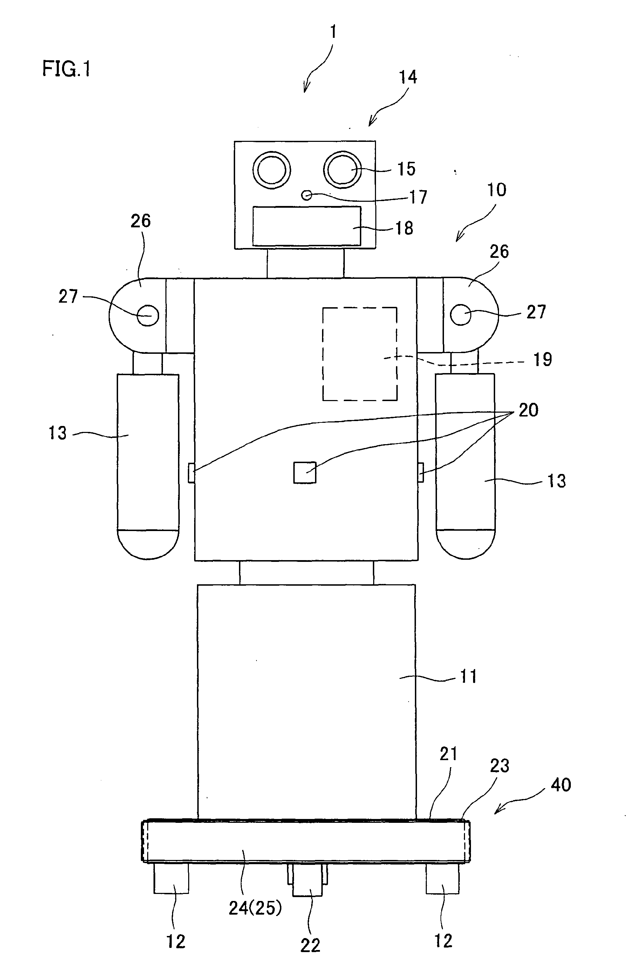

First, the following briefs the schematic structure of the guide robot (self-propelled apparatus). As illustrated in Fig. 1, the guide robot 1 is a humanoid robot provided with a body 10, a pedestal 11, two arms 13, and a head 14. The pedestal 11 is jointed to a traveling unit 40 having running wheels 12.

Inside the body 10 are provided a not-illustrated battery serving as a source of drive for the guide robot 1, and a control unit 19 which controls operations of various parts of the guide robot 1. The control unit 19 is detailed later. The body 10 has, on its outer circumference, a plurality of ultrasonic sensors 20 which detects the presence of various objects therearound, including the guide target and obstacles. To the lower end of this body 10 is jointed the pedestal 11.

On the left and right sides of the body 10, two shoulders 26 are provided respectively. Each shoulder 26 is rotatably jointed via a not-illustrated shaft extended in the left/right directions. Further, the two shoulders 26 are respectively provided with two arms 13. Each arm 13 is rotatably jointed via a shaft 27 extended in the front/back directions (i.e., in a direction orthogonal to the surface of the Fig. 1). In short, each arm 13 is capable of swinging about the shoulders 26 to the front, back, left, and right.

The head 14 is rotatably jointed to the upper end of the body 10. The head 14 (the surface on the side of Fig. 1 facing the viewer) has on the front surface thereof a CCD camera 15, a microphone 17, a speaker 18, or the like. The CCD camera 15 obtains visual information of an object such as the guide target. The microphone 17 obtains audio information of sound around the guide robot 1. The speaker 18 performs audio output to the outside.

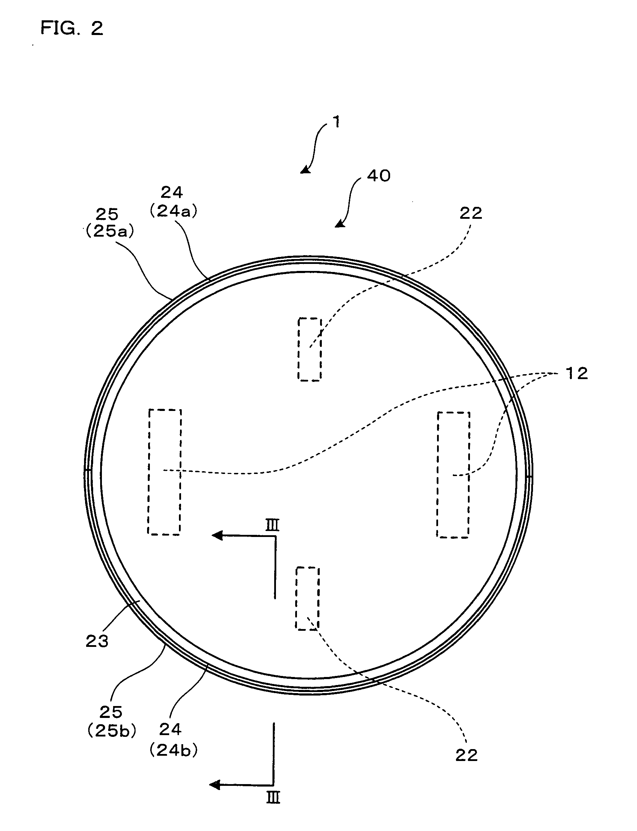

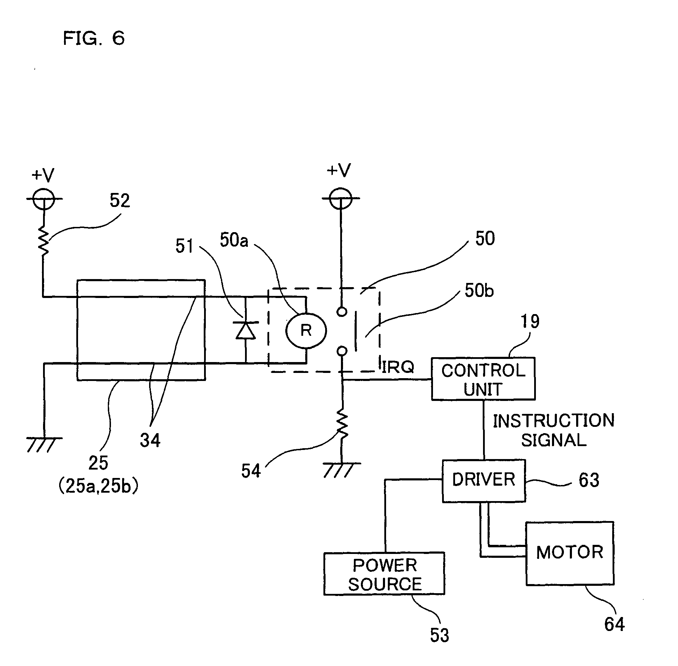

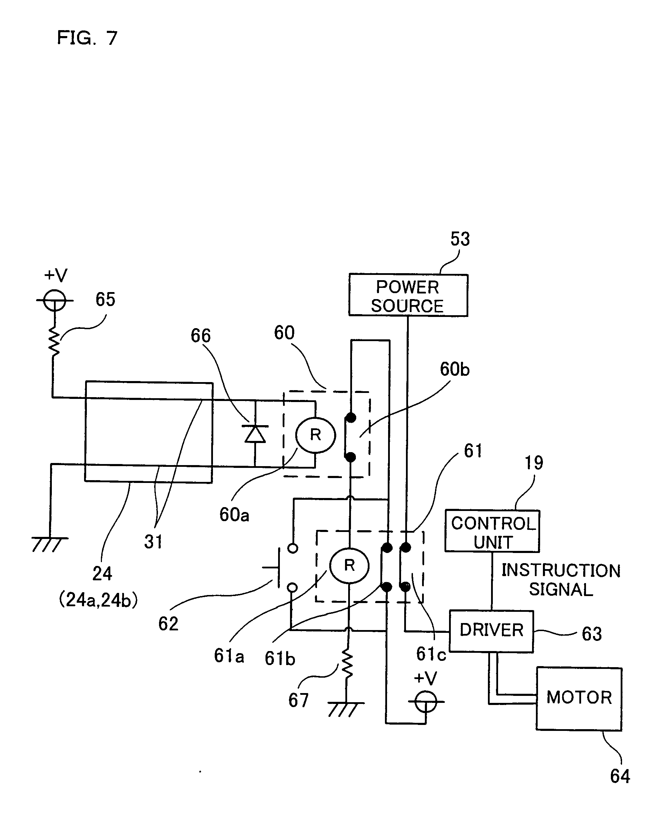

As illustrated in Fig. 1 and Fig. 2, the traveling unit 40 includes: a frame 21 which is the main body; a bumper 23 provided on the outer circumference of the frame 21; two running wheels 12 rotatably provided on the left end portion and right end portion at the bottom part of the frame 21; and auxiliary wheels (casters) 22 each of which is rotatably provided in the middle of the frame 21 in the right/left directions. The two running wheels 12 are driven and rotated by a motor 64 illustrated in Fig. 6 and Fig. 7.

The traveling unit 40 is able to travel on a smooth surface by driving and rotating the two running wheels 12 with the motor 64 and rotating the two auxiliary wheels 22 by the rotation of the running wheels 12. Further, the two running wheels 12 on the left and right can be driven and rotated by the motor 64 at different rotation speeds, respectively. Doing so will create a difference in the movement of the two running wheels 12, thus enabling the traveling unit 40 to turn to any given direction (traveling direction).

Further, as illustrated in Fig. 2, the bumper 23 has on its outer circumference two types of tape switches 24 and 25 (collision detection means) for detecting a collision when the frame 21 collides an obstacle during traveling. These tape switches 24 and 25 are detailed later.

The control unit 19 of the guide robot 1 controls an operation of each part, based on information given by various sensors such as the CCD camera 15. The guide robot 1 therefore is capable of guiding a person to a predetermined position, while communicating with the person.

In other words, the guide robot 1 recognizes a person with the ultrasonic sensor 20 or the CCD camera 15, obtains audio information given by the person with the microphone 17, and perform audio output from the speaker 18 to the person. The guide robot 1 is further capable of recognizing the position of the destination with the CCD camera 15, and traveling by itself, and guiding the person to the target position with a gesture such as swinging the arms 13 or rotating the head 14.

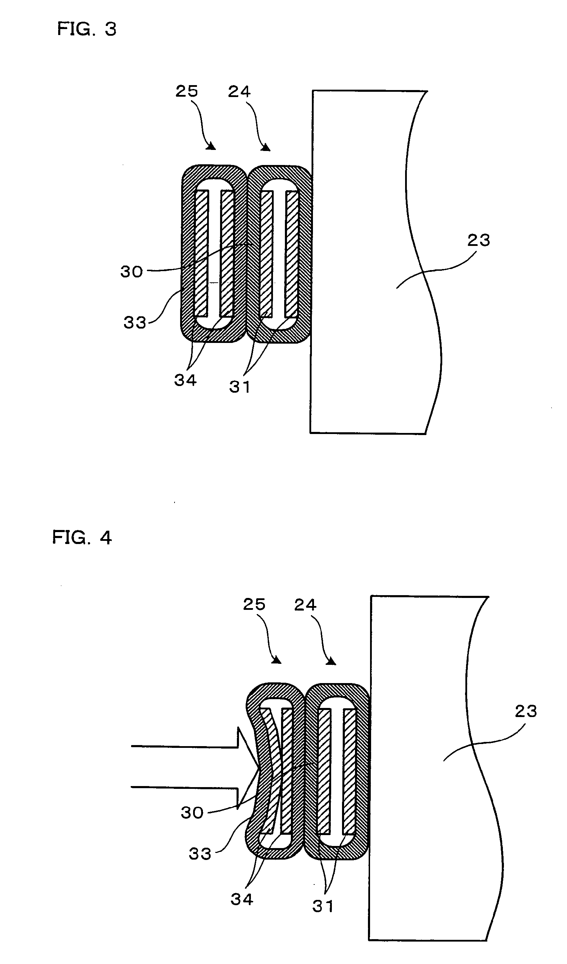

Next, the following describes in detail the tape switches 24 and 25 for collision detection. As illustrated in Fig. 2 and Fig. 3, the tape switch 24 has a pair of electrode plates 31 and a coating material 30. The pair of electrode plates 31 face each other and are spaced from each other by a predetermined distance. The coating material 30 coats the pair of electrode plates 31. The pair of electrode plates 31 and the coating material 30 are formed in a tape-like shape (strap shape) which is long in one direction. The tape switch 24 is fixed to substantially the entire outer circumference of the bumper 23 (frame 21), and the planer direction of the tape switch 24 is parallel to the outer surface of the bumper 23.

Similarly, the tape switch 25 also has a pair of electrode plates 34 and a coating material 33. The pair of electrode plates 34 face each other and are spaced from each other by a predetermined distance. The coating material 33 coats the pair of electrode plates 34. The pair of electrode plates 34 and the coating material 33 are formed in a tape-like shape (strap shape) which is long in one direction. The tape switch 25 overlaps and adheres to the outside of the tape switch 24 (i.e., in a direction of spacing the pair of electrodes, which is orthogonal to the planer direction). In short, the two tape switches 24 and 25 are provided at the same position of the bumper 23, one of the switches overlapping the other.

The coating materials 30 and 33 of the tape switches 24 and 25 are both made of an elastic material such as a rubber material or the like (elastic member). Further, the coating material 33 of the outer tape switch 25 is more elastic than the coating material 30 of the inner tape switch 24. Accordingly, the outer coating material 33 more easily deforms than the inner coating material 30.

As illustrated in Fig. 4, suppose that the frame 25 lightly collides (contacts) an obstacle while the traveling unit 40 is traveling, thus subjecting the outer tape switch 25 to an external force (impulse force) orthogonal to the planer direction of the tape switch 25. In this case, the force will inwardly deform the coating material 33 coating the pair of electrode plates 34. The deformation of the coating material 33 presses the outer electrode plate 34 inwardly, bringing the outer electrode plate 34 into contact with the inner electrode plate 34. As a result, the pair of electrode plates 34 enter the conductive state (ON state). The coating material 30 of the inner tape switch 24 on the other hand is less elastic (more rigid) than the outer coating material 33, and therefore the deformation of the coating material 30 is insignificant. Accordingly, the pair of electrode plates 31 coated by the coating material 30 do not contact each other (OFF state). In other words, the tape switch 25 serves as a first detector of the present invention, and a light collision (first collision) whose collision level is low is detected when the tape switch 25 turns on.

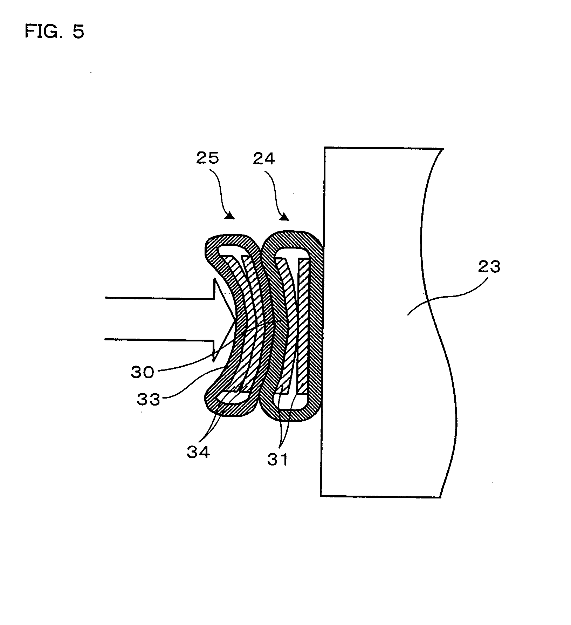

Further, as illustrated in Fig. 5, suppose the traveling unit 40 acts up for example, resulting in a strong collision of the frame 21 with an obstacle, thus subjecting the outer tape switch 25 to a greater external force. In this case, the force will not only turn on the outer tape switch 25, but also deforms the coating material 30 of the inner tape switch 24. Consequently, the outer electrode plate 31 is pressed inwardly, bringing the outer electrode plate 31 into contact with the inner electrode plate 31, thus turning on the tape switch 24. In other words, the tape switch 24 serves as a second detector of the present invention, and a strong collision (second collision) whose collision level is higher than the foregoing first collision is detected when the inner tape switch 24 turns on.

As is understood from the above, two types of collisions are detected simply by: adopting, as the collision detection means, tape switches 24 and 25 having a simple structure, which respectively includes the pairs of electrode plates 31 and 34 and the covering materials 30 and 33 made of an elastic material; and differentiating the elasticity of the two coating materials 30 and 33. This realizes a simple structure for detecting two types of collisions, and is advantageous in terms of costs. Further, the two tape switches 24 and 25 provided to the entire outer circumference of the frame 21 (bumper 23) enable detection of collision, no matter from which direction the obstacle collides the frame 21. Accordingly, the tape switches 24 and 25 are capable of detecting not only a collision of the traveling unit 40 with an obstacle which takes place while the traveling unit 40 travels forward or backward, but also a collision of an obstacle with the side of the frame 21 which takes place while the frame 21 is turning (changing the direction).

Further, the two tape switches 24 and 25 overlap each other at the same position of the bumper 23, in a direction of spacing the electrode plates 31 and 34 (a direction orthogonal to the planer direction). If the two tape switches 24 and 25 are provided in different positions of the bumper 23 respectively, an obstacle contacts only one of the tape switches 24 and 25, and detection of a collision therefore may not be possible. However, such a problem is not a concern in the present invention in which the two tape switches 24 and 25 overlap each other, and reliable detection of a collision is possible.

Note that the tape switch 24 is divided into two parts (24a and 24b), one of which is disposed on one side of the frame 21 (upper part of Fig. 2) in relation to the traveling direction and the other one of which is disposed on the other side (lower part of Fig. 2). Similarly, the tape switch 25 is also divided into two parts (25a and 25b), one of which is disposed on the one side of the frame 21 in relation to the traveling direction and the other one of which is disposed on the other side. Therefore, it is possible to recognize which part of the frame 21 has collided an obstacle, according to which one of the two parts has detected the collision.

Next, the following describes, with reference to Fig. 6 and Fig. 7, an electrical structure of the guide robot 1, mainly focusing on the control unit 19. The control unit 19 includes: a CPU (Central Processing Unit); ROM (Read Only Memory) storing a program, data, or the like for controlling the parts of guide robot 1; a RAM (Random Access Memory) which temporarily stores data which is subject to processing performed by the CPU; or the like.

This control unit 19 receives information (positional information, visual information, audio information, or the like) related to an object such as the guide target, an obstacle around the guide robot 1, via the ultrasonic sensors 20, the CCD camera 15, or the microphone 17. Further, the control unit 19 outputs, to the speaker 18, information (text information, audio message, or the like) to be communicated to the guide target. Further, the control unit 19 drives each part (running wheels 12, arms 13, head 14, or the like) of the guide robot 1, based on the information on the guide target obtained by the ultrasonic sensors 20, the CCD camera 15, or the like, thereby performing a predetermined guiding operation according to a guide control program stored in the ROM.

Further, the guide robot 1 is structured so that, when the tape switch 25 detects the first collision whose collision level is relatively low, the motor 64 which drives the running wheels 12 is controlled by the control unit 19 so that the traveling unit 40 avoids the object (obstacle avoidance operation). On the other hand, the guide robot 1 is structured so as to forcedly stop driving the running wheels 12 to stop the traveling of the traveling unit 40 (travel-stop operation), when the tape switch 24 detects the second collision whose collision level is relatively high. These two operations are detailed hereinbelow, along with description on a specific structure to realize these operations.

### (Obstacle Avoidance Operation)

First, an obstacle avoidance operation of the traveling unit 40 is described. As illustrated in Fig. 6, the driver 63, with the power (electric power) supplied from the power source 53, drives the motor 64 according to an instruction signal from the control unit 19. On the other hand, to one of the electrode plates 34 of the tape switch 25 (25a and 25b), a power source voltage (+V) is applied via a resistor 52. The other one of the electrode plate 34 is connected to GND. Further, between the pair of the electrode plates 34, a coil 50a of a relay 50 and a diode 51 are connected in parallel. Note that the diode 51 and the resistor 52 serve as protection elements.

A connection point 50b of the relay 50 is provided between the +V and GND and is structured so that the GND, the resistor 54, and the +V serially connect to one another. Turning on this connection point 50b inputs an interrupting signal (IRQ) to the control unit 19. Further, the relay 50 is provided for each of the two separate tape switches 25a and 25b. When one of the tape switches 25a and 25b turns on, the connection point 50b of the associated relay 50 turns on, thus inputting an interrupting signal to the control unit 19. On the other hand, the ROM of the control unit 19 stores an obstacle avoidance program which is preferentially run by the CPU upon reception of an interrupting signal. Note that the resistor 54 serves as a protection element.

While the traveling unit 40 collides no obstacle, the pair of electrode plates 34 of the tape switch 25 are not in contact with each other, and the tape switch 25 is in the OFF state as such. At this point, as illustrated in Fig. 6, the power source voltage (+V) is applied to the coil 50a, thus driving the coil 50a to keep the connection point 50b of the relay 50 in the OFF state. As such, no interrupting signal for causing the traveling unit 40 to perform the avoidance operation is input to the control unit 19. Thus, according to the guide control program or the like stored in the ROM, the control unit 19 controls the motor 64 for driving the running wheels 12 via the driver 63, and the traveling unit 40 therefore performs an ordinary traveling process corresponding to the guiding operation or the like.

When the bumper 23 lightly collides (touches) an obstacle while the guide robot 1 is traveling, the pair of the electrode plates 33 enter the conductive state (are shortcircuited), turning on the tape switch 25. The potential of the coil 50a therefore becomes the GND level, and driving of the coil 50a is stopped. Then, the connection point 50b of the relay 50 turns on and an interrupting signal is input to the control unit 19. At this time, the CPU of the control unit 19 runs the avoidance control program stored in the ROM, overriding the other control programs such as the guide control program or the like, so as to control the motor 64 in such a manner that the frame 21 of the traveling unit 40 avoids the obstacle. In short, the control unit 19 serves as avoidance control means of the present invention.

More specifically, the control unit 19 causes the traveling unit 40 to travel in the reverse direction to the traveling direction of the traveling unit 40 immediately before the collision. If the collision with the obstacle takes place while the traveling unit 40 is turning (changing the direction), the control unit 19 causes the traveling unit 40 to turn for a moment in the reverse direction to the direction in which the traveling unit 40 has been turning immediately before the collision. Note that, as illustrated in Fig. 2, the tape switch 25 is divided into two parts 25a and 25b. Therefore, the control unit 19, to some extent, is able to infer the traveling direction of the traveling unit 40 before a collision, according to which one of the two parts 25a and 25b has turned to the ON state. The control unit 19 may infer the traveling direction of the traveling unit 40 before a collision, by referring to the past data related to the motor 64 such as rotation direction and rotation speed, which data is stored in the RAM or the like. The tape switch 25 divided into two parts enables, to some extent, inference of the direction in which an obstacle has collided, even if the colliding object is a person moving towards the guide robot 1. Thus, appropriate avoiding motion is possible.

Through the obstacle avoidance operation thus described, the bumper 23 departs from the colliding obstacle, after which the tape switch 25 turns off. Further, upon elapse of a predetermined period after the tape switch 25 turns off, the control unit 19 determines that the traveling unit 40 is sufficiently apart from the obstacle, and the obstacle avoidance operation is ended. Then, the traveling unit 40 resumes the ordinary traveling process associated with an operation of guiding the guide target or the like.

As is obvious from the above, when an obstacle lightly collides the frame 21 of the traveling unit 40, the traveling unit 40 performs the obstacle avoidance operation, and does not stop traveling. Thus, the traveling unit 40 less frequently stops traveling, and the work of an operator who conducts a recovery operation after every emergency stop is reduced.

### (Travel-Stop Operation)

Next, the following describes a travel-stop operation of the traveling unit 40. As illustrated in Fig. 7, a power source voltage (+V) is applied to one of the electrode plates 31 of the tape switch 24 (24a, 24b) via a resistor 65. Another one of the electrode plates 31 is connected to GND. Between the pair of electrode plates 31 are connected in parallel a coil 60a of the relay 60 and a diode 66. Note that the diode 66 and the resistor 65 serve as a protection element.

A connection point 60b of a relay 60 is provided between +V and the GND. Between the connection point 60b and the +V is provided a connection 61b of a relay 61. Further, between the connection point 60b and the GND, a coil 61a of the relay 61 and a resistor 67 are provided. The connection point 61b is switched between on and off by the coil 61a. Further, a reset switch 62 is connected in parallel to a connection point 61b. A connection point 61c is provided between the driver 63 and the power source 53. This connection point 61c is also switched between on and off by the coil 61a of the relay 61, as is the case of the connection point 61 b. Note that the resistor 67 serves as a protection element.

While the traveling unit 40 collides no obstacle, the pair of electrode plates 31 of the tape switch 24 are not contacting each other, and the tape switch 24 is in the OFF state as such. Meanwhile, the power source voltage (+V) is applied to the coil 60a, and the connection point 60b is in the ON state. Further, the connection point 61b is in the ON state, and the power source voltage (+V) is applied to the coil 61a. This drives the coil 61a, turning on the connection point 61c. In short, the power source 53 supplies the power to the driver 63, enabling the motor 64 to drive the running wheels 12.

For example, suppose that the traveling unit 40 acts up during this state, resulting in a strong collision of the bumper 23 of the frame 21 with an obstacle, and that the tape switch 25 is consequently subjected to a large impulse force. In this case, the pair of electrode plates 31 enter the conductive state (are shortcircuited), thus turning on the tape switch 25. Meanwhile, the potential of the coil 60a becomes the GND level, and is no longer driven. Therefore, the connection point 60b turns off. Then, the potential of the coil 61 a also becomes the GND level and stops being driven. Therefore, the connection points 61b and 61c both turn off. Since the connection point 61c turns off, the power supply from the power source 53 to the driver 63 is immediately shut off, and the motor 64 stops driving the running wheels 12. As a result, the traveling unit 40 stops traveling. Note that the relays 60 and 61 for shutting off the power supply to the motor 64 serve as travel stopping means of the present invention.

Note that the relays 60 and 61 or the like are provided for each of the two tape switches 24a and 24b. When one of the tape switches 24a and 24b turns on, the corresponding connection point 61c turns off, and the power supply to the motor 64 (driver 63) is shut off.

As described, when the traveling unit 40 acts up or the like, resulting in a strong collision of the frame 21 of the bumper 23 with an obstacle thereby turning on the tape switch 24, the power supply to the motor 64 (driver 63) is shut off, and the traveling unit 40 immediately stops traveling. This reliably prevents an accident or a damage to the guide robot 1.

As is already mentioned, when the tape switch 24 turns on, so does the tape switch 25 without an exception. When this tape switch 25 turns on, the interrupting signal for the foregoing obstacle avoidance control is input to the control unit 19 (see Fig. 6); however, the power supply to the motor 64 (driver 63) is shut off at the same time. In other words, the travel-stop operation overrides the obstacle avoidance operation, and the traveling unit 40 immediately stops without performing the obstacle avoidance operation.

When the traveling unit 40 having stopped is moved apart from the obstacle, the pair of electrode plates 31 of the tape switch 24 separates from each other, thus turning off the tape switch 24. Then, the power source voltage (+V) is applied to the coil 60a, and therefore the connection point 60b turns on. However, since the connection point 61b is in the OFF state, and the potential of the potential of the coil 61 a is the GND level, the connection point 61c stays in the OFF state. In other words, the power is not supplied from the power supply unit 53 to the motor 64 even if the traveling unit 40 is placed apart from the obstacle after the emergency stop. As such the traveling unit 40 is not yet able to travel. Accordingly, when a problem in the traveling unit 40 causes the traveling unit 40 to act up, the traveling unit 40 will not start acting up again after the emergency stop is made.

To bring the traveling unit 40 back into a state so that traveling is possible, the reset switch 62 is pressed. Then, the power source voltage (+V) is applied to the coil 61 a and the connection points 6-1b and 61c both turn on. Therefore, the power supply from the power supply unit 53 to the driver 63 resumes. Thus, the motor 64 can be driven.

With the traveling unit 40 of the guide robot 1 of the above embodiment, the two tape switches 24 and 25 enable detection of two different collision level. This enables the traveling unit 40 to perform two types of operations: the obstacle avoidance operation and travel stopping operation. This prevents the traveling unit 40 from frequently stopping in response to an insignificant collision, while stopping the traveling unit 40 in response to a strong collision so as to prevent an accident or a damage.

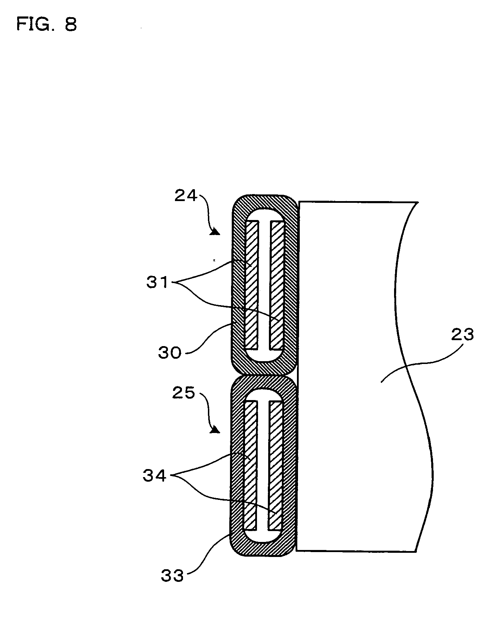

A preferable embodiment of the present invention is described hereinabove; however, the present invention may be modified within the scope thereof. For example, as illustrated in Fig. 3, the above embodiment deals with a case where the tape switches 24 and 25 are disposed on the bumper 23 in the direction of spacing the electrode plates from each other. However, as illustrated in Fig. 8, the tape switches 24 and 25 may be aligned on the bumper 23, in a direction orthogonal to the length direction.

Further, the number of partitions of each of the tape switches 24 and 25 is not limited to two, and each of the tape switches 24 and 25 may be divided into three or more parts. The accuracy in detecting which part of the bumper 23 has collided an obstacle improves, with an increase in the number of partitions. Therefore, more suitable obstacle avoidance operation is performed according to the part where the collision takes place.

Further, the tape switches 24 and 25 do no have to be provided on the entire outer circumference of the bumper 23. The tape switches 24 and 25 may be provided only portions of the outer circumference which are particularly likely to collide an obstacle; e.g., when the bumper has corners, the tape switches 24 and 25 may be provided to the both ends of the bumper in the traveling direction and four corners.

Further, the above embodiment deals with a case where the power supply from the power source 53 to the driver 63 is directly shut off with the use of the relay 61 (see Fig. 7) for the purpose of stopping the traveling of the guide robot 1. However, the driver 63 may stop driving the motor 64 in response to an instruction from the control unit 19 which is given upon input of an interrupting signal to the control unit 19, as is the case of the obstacle avoidance operation (see Fig. 6).

Further, the present invention may be structured so that, when either one of the two collisions is detected by the tape switches 24 or 25, the information of the collision is forwarded to the central control unit, and then the obstacle avoidance operation or the travel-stop operation of the traveling unit 40 is performed according to an instruction from the central control unit.

Further, the collision detection means for detecting the two different collision levels is not limited to the tape switches 24 and 25. For example, it is possible to adopt an impulse force detection sensor such as a strain gauge capable of measuring the impulse force at a time of collision. Doing so also enables discrimination of various levels of collisions based on the impulse force having been measured.

The embodiment described hereinabove is an exemplary application of the present invention to a guide robot which guides a guide target to a target position. However, application of the present invention to a self-propelled apparatus is not limited to a guide robot. That is, the present invention is also applicable to various self-propelled apparatuses such as unmanned carriers, industrial self-propelled robots, or the like.

## Claims

1. A traveling unit for a self-propelled apparatus, comprising: a main body; running wheels rotatably supported by the main body; and traveling-drive means for driving and rotating the running wheels,
wherein the main body includes a collision detection means for detecting a collision when the main body collides an obstacle, and
the collision detection means is capable of detecting two different collisions one of which is a first collision and the other one of which is a second collision whose collision level is higher than that of the first collision.

2. The traveling unit for a self-propelled apparatus according to claim 1, further comprising:
avoidance control means for, upon detection of the first collision by the collision detection means, controlling the traveling-drive means so that the main body avoids the obstacle; and
travel stopping means for, upon detection of the second collision by the collision detection means, causing the traveling-drive means to stop driving the running wheels.

3. The traveling unit for a self-propelled apparatus according to claim 2, wherein
the travel stopping means stops driving the running wheels by shutting off power supply to the traveling-drive means.

4. The traveling unit for a self-propelled apparatus according to any of the claims 1 through 3, wherein:
the collision detection means includes a first detector which detects the first collision and a second detector which detects the second collision;
the first and second detectors each has a pair of electrodes and an elastic member coating the pair of electrodes; and
the elastic member of the first detector has a greater elasticity than that of the second detector.

5. The traveling unit for a self-propelled apparatus according to claim 4, wherein
the elastic member of the first detector and that of the second detector overlap each other in a direction in which the pair of electrodes are spaced from each other.

6. The traveling unit for a self-propelled apparatus according to claim 4 or 5, wherein:
the first and second detectors, respective pairs of electrodes and elastic members of the first and second detectors, are formed in a shape which is long in one direction; and
the first and second detectors cover substantially the entire outer circumference of the main body.
